**Europäisches Patentamt**

**European Patent Office**

**Office européen des brevets**

(11) Veröffentlichungsnummer: **0 106 012**
**A1**

# (12) EUROPÄISCHE PATENTANMELDUNG

(21) Anmeldenummer: **83104880.6**

(22) Anmeldetag: **18.05.83**

(51) Int. Cl.³: **G 01 F 23/22**

(30) Priorität: **25.09.82 DE 3235534**

(43) Veröffentlichungstag der Anmeldung: **25.04.84**
**Patentblatt 84/17**

(84) Benannte Vertragsstaaten: **DE FR GB IT SE**

(71) Anmelder: **VDO Adolf Schindling AG, Gräfstrasse 103, D-6000 Frankfurt/Main (DE)**

(72) Erfinder: **Kant, Bernhard, Berliner Strasse 9, D-6236 Eschborn (DE)**

(74) Vertreter: **Könekamp, Herbert, Dipl.-Ing., Sodener Strasse 9, D-6231 Schwalbach (DE)**

(54) **Einrichtung zum elektrischen Messen eines Flüssigkeitsniveaus.**

(57) Die Erfindung betrifft eine Einrichtung zum elektrischen Messen des Niveaus einer in einem Behälter enthaltenen Flüssigkeit. Sie weist dazu eine in die Flüssigkeit eingetauchte, von einem Schutzrohr 1 umschlossene temperaturabhängige elektrisch fremdgeheizte Leiterfolie 2 auf, deren von einer Auswerteschaltung erfaßbarer Gesamtwiderstand von dem Flüssigkeitsniveau im Behälter abhängig ist. Um eine Niveaumessung mit hoher Genauigkeit zu ermöglichen, ist die Leiterfolie 2 bandartig ausgebildet und durch an einer ihrer Längskanten 3 angreifende Halteelemente 4, 4′ wendelförmig, beidseitig an ihrer Oberfläche von der Flüssigkeit umspülbar in dem Schutzrohr 1 gehalten.

EP 0 106 012 A1

VDO Adolf Schindling AG    - 1 -    Gräfstraße 103
6000 Frankfurt/Main

G-S Kl-do
1671
17. September 1982

### Einrichtung zum elektrischen
### Messen eines Flüssigkeitsniveaus

Die Erfindung bezieht sich auf eine Einrichtung zum elektrischen Messen des Niveaus einer in einem Behälter enthaltenen Flüssigkeit, mit einer in die Flüssigkeit, eingetauchten, von einem Schutzrohr umschlossenen Leiterfolie wie einer temperaturabhängigen elektrisch fremdgeheizten Widerstandsfolie, deren von einer Auswerteschaltung erfaßbarer Gesamtwiderstand von dem Flüssigkeitsniveau im Behälter abhängig ist oder einer zwei einen Kondensator bildenden Leiter tragenden Kapazitätsfolie.

Bei derartigen bekannten Einrichtungen ist eine linear sich erstreckende Widerstandsfolie mit der einen Seite ihrer Oberfläche auf einem Träger aufgebracht, welcher gleichzeitig eine Wand des einen rechteckigen Querschnitt aufweisenden Schutzrohres bildet. Aufgrund der relativ geringen von der Flüssigkeit bedeckbaren Fläche der Widerstandsfolie sind Niveaumessungen mit höherer Meßgenauigkeit nicht möglich. Messungen mit hoher Meßgenauigkeit sind aber insbesondere im unteren Meßbereich von Füllstandsanzeigen im Kraftstofftank von Kraftfahrzeugen

- 2 -

0106012

erforderlich, um den Fahrer exakt darüber zu informieren, wie weit er mit dem vorhandenen Kraftstoff noch fahren kann.

Aufgabe der Erfindung ist es daher, eine Einrichtung nach dem Oberbegriff zu schaffen, die eine Niveaumessung mit hoher Genauigkeit ermöglicht.

Diese Aufgabe wird erfindungsgemäß dadurch gelöst, daß die Leiterfolie bandartig ausgebildet ist und durch an einer ihrer Längskanten angreifende Halteelemente wendelförmig, beidseitig an ihrer Oberfläche von der Flüssigkeit umspülbar in dem Schutzrohr gehalten ist. Sowohl die wendelförmige Ausbildung, die eine wesentlich größere Länge der Leiterfolie ermöglicht als es der linearen Eintauchtiefe entspricht, als auch die allseitige Umspülbarkeit der Leiterfolie mit Flüssigkeit, führen zu einer großen benetzbaren Fläche der Leiterfolie. Dadurch wird ein wesentlich vergrößertes Auflösungsvermögen des Meßbereichs und damit auch eine wesentliche Steigerung der Meßgenauigkeit erreicht, ohne daß dazu ein größerer Platzbedarf erforderlich wäre.

Die Oberfläche der Leiterfolie kann sich sowohl radial als auch axial im Schutzrohr erstrecken. Die radiale Erstreckung der Oberfläche der Leiterfolie ermöglicht dabei vorteilhafterweise eine Wendelung der Leiterfolie mit relativ geringer Steigung, was zu einer besonders hohen Auflösung des Meßbereichs führt.

Ein Entnahmerohr, z.B. das Ansaugrohr für den Kraftstoff, kann durch die Wendel der Leiterfolie hindurchragen und ist somit ohne wesentlichen zusätzlichen Platzbedarf in die Einrichtung integrierbar.

Zur einfachen und lagegenauen Befestigung der Leiterfolie können die Halteelemente durch eine radial an der Schutzrohrinnenwand und/oder dem Entnahmerohr angrenzende Haltewendel gebildet sein, die vorzugsweise mit dem Schutzrohr oder dem Entnahmerohr einteilig ausgebildet ist. Eine derartige Ausbildung ist auf einfache Weise durch Spritzgießen oder Extrusion aus Kunststoff herstellbar.

Zur lagerichtigen Befestigung kann die Haltewendel eine nutartige Ausnehmung besitzen, in die die Leiterfolie mit ihrem Bereich ihrer Längskante hineinragt. Aufgrund beidseitiger Befestigung ist dabei die Leiterfolie besonders sicher gehalten, wenn die Haltewendel zwei axial in entgegengesetzte Richtung gerichtete nutartige Ausnehmungen besitzt und der Abstand von Nutboden zu Nutboden der mit ihren Öffnungen einandergegenüberliegenden Ausnehmungen etwa der Breite der Leiterfolie entspricht.

In einer anderen Ausbildungsmöglichkeit zur lagerichtigen Befestigung der Leiterfolie kann die Haltewendel eine radial nach außen gerichtete Anlagefläche besitzen, an der die Leiterfolie mit ihrem Randbereich in Anlage ist, wobei eine besonders sichere Halterung erreicht wird, wenn die Haltewendel zwei Anlageflächen besitzt und je an einer Anlagefläche ein Randbereich der Leiterfolie in Anlage ist.

Besitzt die Haltewendel einen radial an der Innenwand des Schutzrohres und/oder dem Entnahmerohr anliegenden Abstandshalter, so wird sichergestellt, daß die Leiterfolie immer einen bestimmten Mindestabstand zu Schutzrohr und/oder Entnahmerohr hat und somit gut und ausreichend von Flüssigkeit umgeben ist.

Ein guter Flüssigkeitsaustausch innerhalb des Schutzrohres sowie vom Inneren des Schutzrohres nach außen,
ist dadurch möglich, daß das Schutzrohr radiale und/
oder die Haltewendel axiale Durchflußöffnungen besitzt. Gleichzeitig werden dabei aber kurzfristige
Schwankungen des Niveaus, die z.B. auf Bewegungen des
Behälters beruhen, durch die Durchflußöffnungen gedämpft.

Ist das Schutzrohr und wenn vorhanden auch
das Entnahmerohr biegbar ausgebildet, so kann aufgrund der Wendelform der Leiterfolie und deren
Halteelementen das gesamte in den Behälter ragende Bauteil in jede beliebige Richtung gebogen und so z.B. einer komplizierten Behälterform angepaßt werden.

Ausführungsbeispiele der Erfindung sind in der Zeichnung
dargestellt und werden im folgenden näher beschrieben.
Es zeigen

Figur 1   einen Ausschnitt einer von einem Schutzrohr umschlossenen Widerstandsfolie im
Schnitt

Figur 2   eine Schnittansicht entlang der Linie II-II

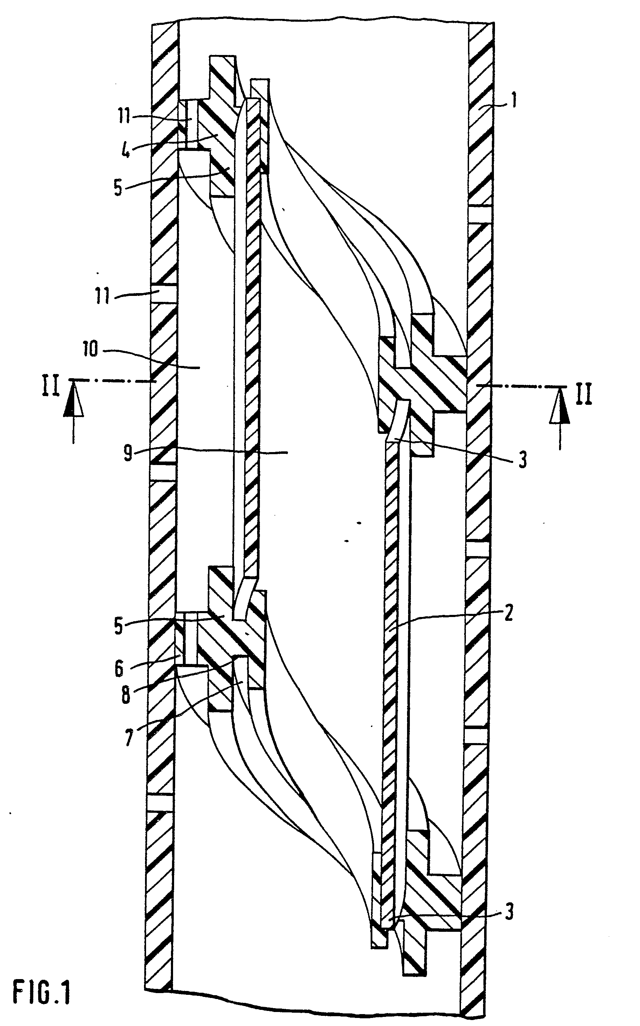

in Figur 1

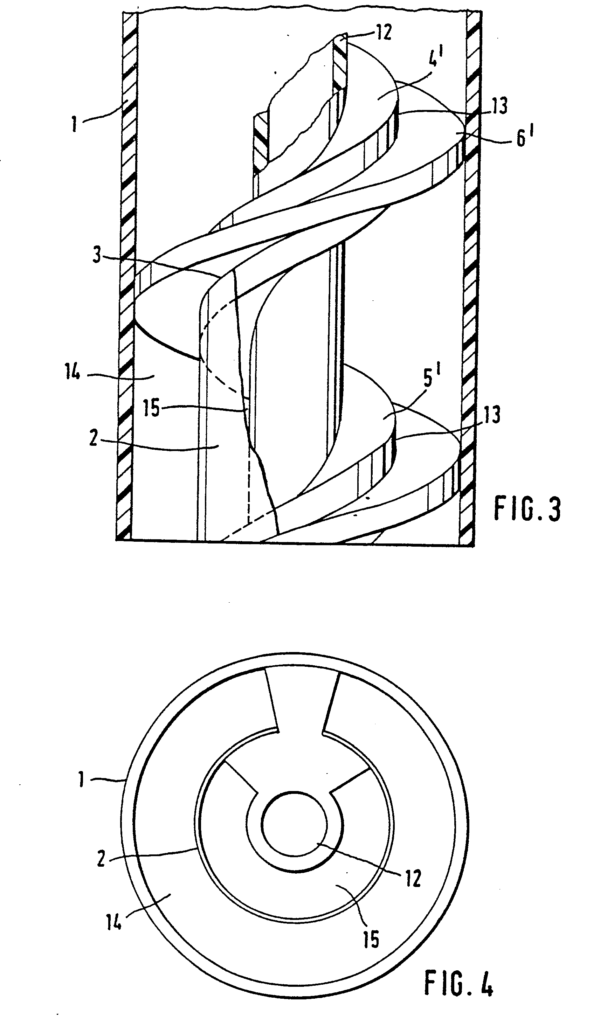

Figur 3   einen Ausschnitt eines zweiten Ausführungsbeispiels einer von einem Schutzrohr umschlossenen Widerstandsfolie im Schnitt

Figur 4   eine Axialansicht des Gegenstandes aus Figur 3

In den Figuren ist ein Schutzrohr 1 dargestellt, in dem
eine bandartige Widerstandsfolie 2 ausgebildete Leiterfolie wendelförmig mit sich axial im Schutzrohr 1 erstreckender Oberfläche angeordnet ist.

Über an den Längskanten 3 der Widerstandsfolie 2 angreifenden Halteelementen 4 bzw.4' sind die Widerstandsfolien 2 im Schutzrohr 1 gehalten.

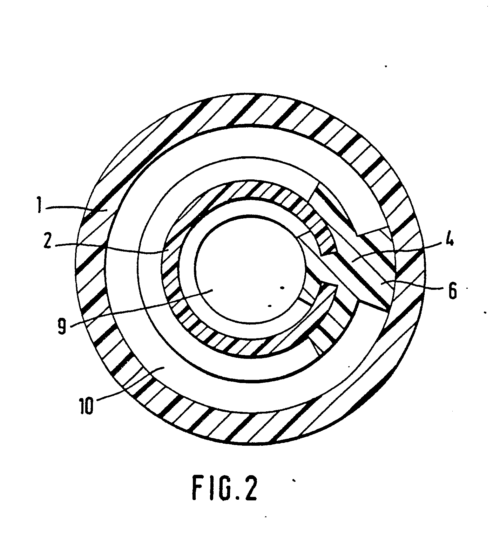

In den Figuren 1 und 2 besteht das Halteelement 4 aus einer Haltewendel 5, die mit einem radial nach außen hervorstehenden Abstandshalter 6 an der Innenwand des Schutzrohres 1 in Anlage ist. An ihren axial gerichteten Flächen ist die Haltewendel 5 jeweils mit einer nutartigen Ausnehmung 7 ausgebildet, wobei der Abstand der einander zugewandten Nutböden 8 etwa der Breite der Widerstandsfolie 2 entspricht.

Diese Widerstandsfolie 2, deren Dicke etwa der Breite der Ausnehmungen 7 entspricht, ist mit ihren Längskanten 3 in die Ausnehmungen 7 eingesetzt. Auf diese Weise ist die Widerstandsfolie 2 eine wendelförmige Kammer 10 bildend in sicherem Abstand zur Innenwand des Schutzrohres 1 gehalten und umschließt radial nach innen einen zylindrischen Raum 9. Sowohl auf der Seite der Kammer 10 als auch auf der Seite des zylindrischen Raumes 9, kann die Widerstandsfolie weitgehend über ihre ganze Oberfläche von der Flüssigkeit umspült werden.

Zur Unterstützung eines Flüssigkeitsaustauschs von einem Abschnitt der Kammer 10 zum anderen daneben liegenden Abschnitt der Kammer 10, sowie von der Kammer 10 radial nach außen, sind im Schutzrohr 1 sowie in der Haltewendel 5 Durchflußöffnungen 11 ausgebildet.

Durch den zylindrischen Raum 9 kann ein nicht dargestelltes Entnahmerohr geführt werden. Ist dabei das Schutzrohr 1, das vorzugsweise bei der Montage auf die Abstandshalter 6 der bereits mit der Widerstandsfolie 2 versehenen Haltewendel 5 axial aufgeschoben wird, biegbar ausgebildet, so ist die gesamte Baueinheit problemlos biegbar und kann leicht auch in kompliziert geformten Behältern in jede Einbaulage gebracht werden.

Bei dem Ausführungsbeispiel der Figuren 3 und 4 ist ebenfalls eine Haltewendel 5' vorgesehen, die einen radial hervorstehenden an der Innenwand des Schutzrohres 1 anliegenden Abstandshalter 6' aufweist. Haltewendel 5' und Abstandshalter 6' sind einstückig mit einem konzentrischen Entnahmerohr 12, vorzugsweise als Spritzgußteil aus Kunststoff ausgebildet.

Die Haltewendel 5' besitzt axial zu beiden Seiten des Abstandshalters 6' radial nach außen gerichtete Anlageflächen 13, an denen die Widerstandsfolie 2 jeweils mit dem Bereich ihrer Längskanten 3 in Anlage ist. Da die Anlageflächen 13 radial etwa gleichen Abstand zur Innenwand des Schutzrohres 1 und zum Entnahmerohr 13 haben, ist zwischen dem Schutzrohr 1 und der Widerstandsfolie 2 ein wendelförmiger Raum 14 sowie zwischen dem Entnahmerohr 12 und der Widerstandsfolie 2 eine wendelförmige Kammer 15 gebildet. Damit ist die Widerstandsfolie 2 weitgehend über ihre gesamte Oberfläche gut von der Flüssigkeit umspülbar.

Auch dieses Ausführungsbeispiel ist leicht montierbar, indem zuerst die Widerstandsfolie 2 auf die Anlageflächen 13 aufwickelbar und anschließend das Schutzrohr 1 auf die Abstandshalter 6 aufschiebbar ist.

0106012

Sind die erfindungsgemäßen Einrichtungen elastisch verformbar ausgebildet, so können sie mit Vorspannung am
Boden des Behälters anliegend eingebaut werden, so daß
sie auchbei normaler Verformung des Behälterbodens aufgrund unterschiedlicher Belastung bei unterschiedlichen
Füllzuständen eine korrekte Messung vom Behälterboden
aus garantieren.

0106012

Patentansprüche

1. Einrichtung zum elektrischen Messen des Niveaus einer in einem Behälter enthaltenen Flüssigkeit, mit einer in die Flüssigkeit·eingetauchten, von einem Schutzrohr umschlossenen Leiterfolie wie einer temperaturabhängigen elektrisch fremdgeheizten Widerstandsfolie, deren von einer Auswerteschaltung erfaßbarer Gesamtwiderstand von dem Flüssigkeitsniveau im Behälter abhängig ist, oder einer zwei einen Kondensator bildenden Leiter tragenden Kapazitätsfolie, dadurch gekennzeichnet, daß die Leiterfolie (2) bandartig ausgebildet ist und durch an einer ihrer Längskanten (3) angreifende Halteelemente (4, 4') wendelförmig, beidseitig an ihrer Oberfläche von der Flüssigkeit umspülbar in dem Schutzrohr (1) gehalten ist.

2. Einrichtung nach Anspruch 1, dadurch gekennzeichnet, daß sich die Oberfläche der Leiterfolie im Schutzrohr radial erstreckt.

3. Einrichtung nach Anspruch 1, dadurch gekennzeichnet, daß sich die Oberfläche der Leiterfolie (2) axial im Schutzrohr (1) erstreckt.

4. Einrichtung nach einem der vorhergehenden Ansprüche, dadurch gekennzeichnet, daß ein Entnahmerohr (12) koaxial durch die Wendel der Leiterfolie (2) hindurchragt.

5. Einrichtung nach einem der vorhergehenden Ansprüche, dadurch gekennzeichnet, daß die Halteelemente (4, 4') durch eine radial an der Schutzrohrinnenwand und/oder dem Entnahmerohr (12) angrenzende Haltewendel (5, 5') gebildet ist.

6. Einrichtung nach Anspruch 5, dadurch gekennzeichnet, daß die Haltewendel (5') mit dem Schutzrohr oder dem Entnahmerohr (12) einteilig ausgebildet ist.

7. Einrichtung nach einem der vorhergehenden Ansprüche, dadurch gekennzeichnet, daß die Haltewendel (5) eine nutartige Ausnehmung (7) besitzt, in die die Leiterfolie (2) mit ihrem Bereich ihrer Längskante (3) hineinragt.

8. Einrichtung nach Anspruch 7, dadurch gekennzeichnet, daß die Haltewendel (5) zwei axial in entgegengesetzter Richtung gerichtete nutartige Ausnehmungen (7) besitzt und der Abstand von Nutboden (8) zu Nutboden (8) der mit ihren Öffnungen einandergegenüberliegenden Ausnehmungen (7) etwa der Breite der Leiterfolie (2) entspricht.

9. Einrichtung nach einem der Ansprüche 1-6, dadurch gekennzeichnet, daß die Haltewendel (5') eine radial nach außen gerichtete Anlagefläche (13) besitzt, an der die Leiterfolie (2) mit ihrem Randbereich in Anlage ist.

10. Einrichtung nach Anspruch 9, dadurch gekennzeichnet, daß die Haltewendel (5') zwei Anlageflächen (13) besitzt und je an eine Anlagefläche (13) ein Randbereich der Leiterfolie (2) in Anlage ist.

11. Einrichtung nach einem der vorhergehenden Ansprüche, dadurch gekennzeichnet, daß die Haltewendel (5, 5') einen radial an der Innenwand des Schutzrohres (1) und/oder dem Entnahmerohr (12) anliegenden Abstandshalter (6, 6') besitzt.

12. Einrichtung nach einem der vorhergehenden Asnprüche, dadurch gekennzeichnet, daß das Schutzrohr (1) radiale und/oder die Haltewendel (5) axiale Durchflußöffnungen (11) besitzt.

13. Einrichtung nach einem.der vorhergehenden Ansprüche, dadurch gekennzeichnet, daß das Schutzrohr (1) biegbar ist.

FIG.1

FIG.2

0106012

FIG.3

FIG.4

0106012
Nummer der Anmeldung

**Europäisches Patentamt**

# EUROPÄISCHER RECHERCHENBERICHT

| | EINSCHLÄGIGE DOKUMENTE | | EP 83104880.6 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| P,X | <u>DE - A1 - 3 137 153</u> (LICENTIA)<br>* Seite 7, Zeile 6 - Seite 10, Zeile 24; Fig. 1-6 *<br>-- | 1-3,5-8,11 | G 01 F 23/22 |
| A | <u>DE - A - 1 473 132</u> (MOREAU)<br>* Ansprüche 1,4; Fig. 2 *<br>-- | 1,2,3,4 | |
| A | <u>DE - B - 1 265 444</u> (SIEMENS)<br>* Ansprüche; Fig. 1,5,6 *<br>-- | 1 | |
| A | <u>DE - A - 1 959 041</u> (GES.F. KERN-FORSCHUNG)<br>* Ansprüche; Fig. 1 *<br>-- | 1 | |
| A | <u>US - A - 3 324 722</u> (REICKS)<br>* Fig. 1-3; Spalte 2, Zeilen 8-31; Ansprüche 1-13 *<br>---- | 1 | RECHERCHIERTE SACHGEBIETE (Int. Cl. ³)<br><br>G 01 F 23/00 |

Der vorliegende Recherchenbericht wurde für alle Patentansprüche erstellt.

| Recherchenort | Abschlußdatum der Recherche | Prüfer |
|---|---|---|
| WIEN | 30-12-1983 | ERBER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82